# EUROPEAN PATENT APPLICATION

(11) **EP 1 498 808 A2**
(43) Date of publication of application: **19.01.2005**
(21) Application number: 04008249.7
(22) Date of filing: 05.04.2004
(51) Int. Cl.: G06F 3/033

(54) **Fuel cell powered optical navigation device**

(30) Priority: 02.07.2003 US 612655
(71) Applicant: Agilent Technologies Inc, Palo Alto, CA 94306-2024 (US)
(72) Inventor: DePue, Marshall T., San Mateo, CA 94402 (US); Xie, Tong, San Jose, CA 95121 (US); Baney, Douglas M., Los Altos, CA 94024 (US); VanWiggeren, Gregory D., Los Gatos, CA 95032 (US); Drake, Javit A., Waltham, MA (US)
(74) Representative: Liesegang, Roland, Dr.-Ing.

(57) **Abstract**

A fuel cell is integrated with an optical navigation device to extend operational lifetime. A water recycling fuel cell is used to reduce fuel requirements to allow operation of a remote optical navigation device together with a computer on the order of six months or more.

## Description

### Field of Invention

This invention relates to the use of micro fuel cells to power wireless computer pointing devices.

### Background of Invention

Wireless optical navigation devices such as battery operated optical mice with radio frequency or infrared transmitters are presently available based on sensors such as Agilent Technology's ADNS-2030 or ADNS-2020. Typically, a light emitting diode (LED) light source illuminates the surface under the mouse as the mouse is moved. Battery life is limited by the system's total power consumption including the optical light source, such as the LED, the optical sensor, processing electronics and the radio frequency or infrared transmitter. Depending on the amount of use, typical intervals for battery changes for wireless, battery operated optical mice is in the range from 1 to 3 months. Additionally, batteries add considerable weight to the optical mouse interfering with ease of use.

### Summary of the Invention

In accordance with the invention, an attractive application for micro fuel cells is to provide a lightweight power source for wireless optical navigation devices such as wireless optical mice used as a pointing device in conjunction with computers such as personal computers and workstations. In particular, micro fuel cells offer an environmentally friendly source of power allowing six months or more of typical use for wireless optical navigation devices for computers before refueling is required.

### Brief Description of the Drawings

FIG. 1 shows a micro fuel cell layout suitable for use with a wireless optical navigation device in accordance with the invention.
FIG. 2a shows an embodiment in accordance with the invention.
FIG. 2b is a simplified diagram showing the electrical connections in accordance with an embodiment of the invention.
FIG. 3 shows a micro fuel cell configuration in accordance with an embodiment of the invention.

### Detailed Description of the Invention

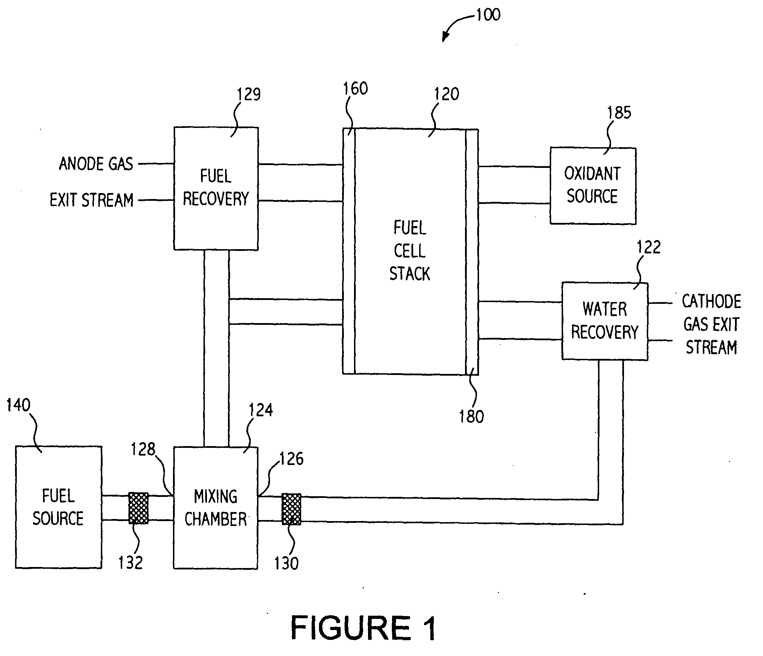

In accordance with an embodiment of the invention, FIG. 1 shows water recycling micro fuel cell system 100 suitable for integration with a wireless optical navigation device, such as a wireless optical mouse, to allow extended operation. Micro fuel cell system 100 includes fuel cell stack 120, fuel source 140 coupled to anode side 160 of fuel stack 120 and oxidant source 185 coupled to cathode side 180 of fuel cell stack 120. A water recovery mechanism 122 separates and collects water from the cathode exit stream and feeds water from cathode side 180 of fuel cell stack 120 to mixing chamber 124 where fuel is hydrated prior to delivery to anode side 160 of fuel cell stack 120. Mixing chamber 124 includes water input port 126 and fuel input port 128. Fuel recovery mechanism 129 recycles hydrated fuel from anode side 160 of fuel cell stack 120 and discharges anode gas products (e.g., carbon dioxide) into anode gas exit stream.

In micro-fuel cell system 100, selectively permeable membrane 130 is positioned upstream of water input port 126. Membrane 130 is permeable to water but largely impermeable to fuel. Hence, selectively permeable membrane 130 allows water to enter mixing chamber 124 while largely preventing outflow of fuel to cathode side 120 of fuel cell stack 120. Selectively permeable membrane 130 inhibits fuel from mixing with oxidant at cathode side 180 of fuel cell stack 120 to prevent contamination of the oxidant and reduced cathode performance.

Selectively permeable membrane 132 is located upstream of fuel input port 128. Selectively permeable membrane 132 is permeable to fuel and largely impermeable to water. Selectively permeable membrane 132 prevents the outflow of water from mixing chamber 124 into fuel source 140. Thicknesses and cross-sectional areas of selectively permeable membranes 130, 132 are selected to achieve a target mixing ratio of fuel and recycled water, typically in the range of about 0.5/99.5 to about 4/96. To achieve the desired flow rates of recycled water and fuel, some embodiments in accordance with the invention may include multiple channels to supply recovered water from cathode side 180 of fuel stack 120 into mixing chamber 124 and multiple channels to supply fuel from fuel source 140 into mixing chamber 124.

Selectively permeable membrane 130 is permeable to water and largely impermeable to fuel. Exemplary materials for selectively permeable membrane 130 for a direct methanol micro fuel cell include hydrophilic material such as mordenite or perfluorosulfonic acid polymer such as NAFION® available from E. I. Du Pont de Nemours Company. Selectively permeable membrane 132 is permeable to fuel and largely impermeable to water. Exemplary materials for selectively permeable membrane 132 for a direct methanol micro fuel cell include hydrophobic material such as polyolefins and rubbery polymers such as neoprene.

For embodiments in accordance with the invention, fuel cell stack 120 may be implemented using any one of a wide variety of different fuel cell technologies such as low-temperature polymer electrolyte fuel cell technology. The micro fuel cell may use liquid or gas reactants. For liquid based micro fuel cells, the recycled water may serve as a dilutent. In these systems, osmosis through selectively permeable membrane 130 accomplishes the dilution. For feed gas based micro fuel cells, product water at cathode side 180 of fuel cell stack 120 may be used for humidification. In feed gas based systems, diffusion from wet cathode side 180 to dry feed gas provides water transport. In one embodiment in accordance with the invention, micro fuel cells in fuel cell stack 120 are implemented as direct methanol micro fuel cells which each include a membrane electrode assembly that is formed from a thin, proton transmissive solid polymer membrane-electrolyte or ion-exchange membrane positioned between an anode layer and a cathode layer. The membrane electrode assembly is typically sandwiched between a pair of electrically conductive anode and cathode current collectors and typically contains channels for distributing hydrated methanol from mixing chamber 124 over the anode and distributing air from oxidant source 185 over the cathode.

Water recovery mechanism 122 recovers water from cathode side 180 of fuel cell stack 120 and may be a passive water recovery mechanism such as a membrane selectively permeable to cathode gas products and impermeable to water. Fuel recovery mechanism 129 recovers hydrated fuel from anode side 160 of fuel cell stack 120 and may include a membrane that is selectively permeable to anode gas products and impermeable to the hydrated fuel received from anode side 160 of fuel cell stack 120.

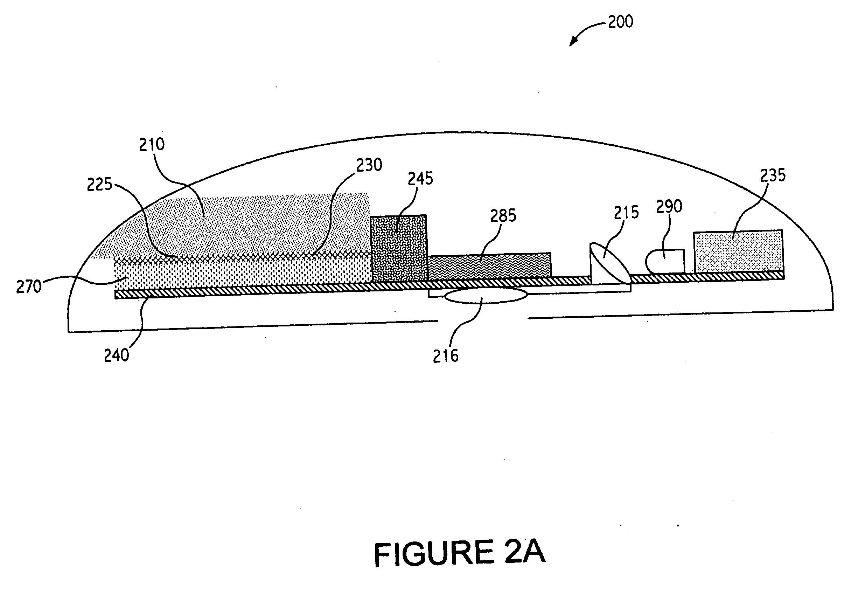

FIG. 2a shows a simplified side view of the layout of major components for wireless optical mouse 200 in accordance with an embodiment of the invention using micro fuel cell system 100 described in FIG. 1. Fuel cartridge 210 is positioned over mixing and osmotic membrane region 225 and air vents 230. Typical dimensions for fuel cartridge 210 are determined by the need to store the desired amount of methanol fuel. Fuel cartridge 210 is typically replaceable and incorporates selectively permeable membrane 132 (see FIG. 1). It is typically convenient to have selectively permeable membrane 132 be part of the replaceable fuel cartridge as the membrane is degraded by contaminants during use leading to clogging.

Rechargeable battery 245, such as a 20 g lithium polymer battery operating at 3 volt, provides about 3 W hours of power. Rechargeable battery 245 directly powers wireless optical mouse 200 and is recharged by fuel cell stack 270 from which power is preferentially drawn at a constant rate. Fuel cell output is limited by the exchange membrane ionic resistance, by the crossover time of the reactants across the ion exchange membrane positioned between cathode side 180 and anode side 160 of fuel cell stack 120 and mass transport of reactants to the electrodes. A narrow peak power operating window results. Therefore, a fuel cell is typically not good for applications requiring burst power. Rechargeable battery 245 is typically used in embodiments requiring high frame rates (see discussion below) as is the case for an optical mouse for videogame applications. Here it is important for wireless optical mouse 200 to respond to rapid movement. For lower frame rates, a capacitor (not shown) may be substituted for rechargeable battery 245. For example, if wireless optical mouse 200 has a burst power requirement of 100 mW but burst power is required for only 10% of the operating time of wireless mouse 200, typical for a low power optical mouse with relatively low frame rate, the use of a capacitor on the order of 1µF allows fuel cell stack 120 to operate at a constant power outpt that is about 10% of the burst power requirement of 100 mW.

The air intake portion of air vents 230 typically includes two filters. A first filter is relatively coarse and used to keep particulate contaminants out of fuel cell stack 270. A typical material for the first filter may be the porous foam used in personal computer cooling fan applications. A second filter is used to keep water from passing out of wireless optical mouse 200 while allowing air into fuel cell stack 270; filter materials such as GORTEX® may be used for the second filter. Fuel cell stack block 270 includes fuel recovery mechanism 129 and mixing chamber 124. Typical dimensions for fuel cell stack 270 are about 5 cm² area with an approximate thickness on the order of 5 mm. The anode vent portion of air vents 230 is an exhaust to allow reaction by-products to exit fuel cell stack 270. For an embodiment using a methanol fuel cell, the anode exhaust gas is carbon dioxide. Cathode vent portion of air vents 230 includes water recovery mechanism 122 and allows the venting of water vapor.

Printed circuit board block 240 may be an existing wireless optical mouse control board with area dimensions of about 5 cm by 8 cm. The optical navigation system includes optical source 290 which may be a low powered VCSEL (vertical cavity surface emitting laser) based optical mouse, an edge emitting low powered laser based optical mouse or an LED (light emitting diode) based optical mouse. Additionally the optical navigation system includes imager 285, imaging lens 216 and lens 215 as well as the relevant navigation electronics in mouse control electronics 235. An important feature for optical navigation systems is the frame rate, defined as the number of images obtained at the navigation surface per unit time. In an embodiment in accordance with the invention shown in FIG.2a, light from optical source 290 passes through lens 215 to a surface and returns to imager 285 via imaging lens 216. Lens 215 functions to adjust collimation and beam size. Mouse control electronics 235 typically includes the radio frequency or infrared transmitter that allows wireless optical mouse 200 to communicate with a computing device having a video interface. Considerations for the optical system typically include the desire to have compact optics to reduce package size and reducing distances lowers the collimation requirements. Additionally, large diameter lenses are expensive and bulky. Compact design allows the use of most of the light by the imager while reducing the problem of stray light from divergent beams over larger distances. Typical choices for imager 285 are CMOS or CCD detectors in the range of 17 by 17 pixels to 33 by 33 pixels The use of compact optics also provides for more design freedom for the layout of fuel cell system 100 or similar systems.

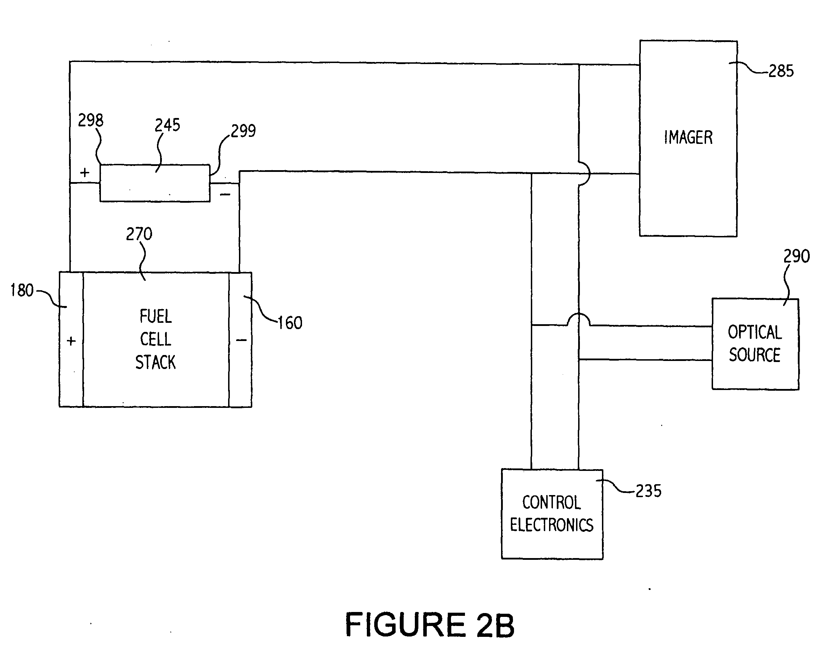

FIG. 2b is a simplified block diagram showing the electrical layout of an embodiment in accordance with the invention for optical wireless mouse 200. Fuel cell stack is connected to battery 245, so that anode 160 is electrically connected to the negative battery terminal 299 of battery 245 and cathode 180 is electrically connected to positive battery terminal 298. Battery 245 is electrically connected in parallel to imager 285, optical source 290 and control electronics 235.

An important consideration for a wireless optical navigation device such as wireless optical mouse 200 is the operation time available between refueling. A reasonable interval between refueling which provides an advantage over conventional battery operated wireless optical mice is on the order of six months. To estimate the amount of fuel required for a typical six months of operation, a power budget must be obtained. A typical low power VCSEL source requires approximately 5 mW of power, a typical CMOS imager together with the processor requires approximately 30 mW and a radio frequency transmitter having the desired ranges requires about 20 - 40 mW (Bluetooth) yielding a total power requirement of 55-75 mW. Assuming an average use of six days per week, eight hours per day for six months gives 1152 hours of use. Assuming a user interaction time of about 10% during which time wireless optical mouse 200 operates at full power and otherwise is in sleep mode where there is no power draw results in about 115 hours of actual operation. Hence, the total power budget for six months of use is approximately 35 W hours. Assuming a micro fuel cell efficiency of between about 20 -30 % and using methanol, with a thermal energy of 5600 W hours/kg, results in the need for about 4- 6g of methanol to achieve the six month operation requirement. Power requirements may be further reduced if an infrared link is used in place of the radio frequency as power consumption is typically less than 5 mW. An infrared link typically requires a line of sight to the computer.

The operation time between refueling may be improved by higher efficiency fuel cells, use of fuels with higher thermal energies and system level power management improvements. System level improvements include using low power electronics, simplified navigation algorithms requiring less processor overhead, smaller CMOS imagers and use of pulsed LEDs or lasers.

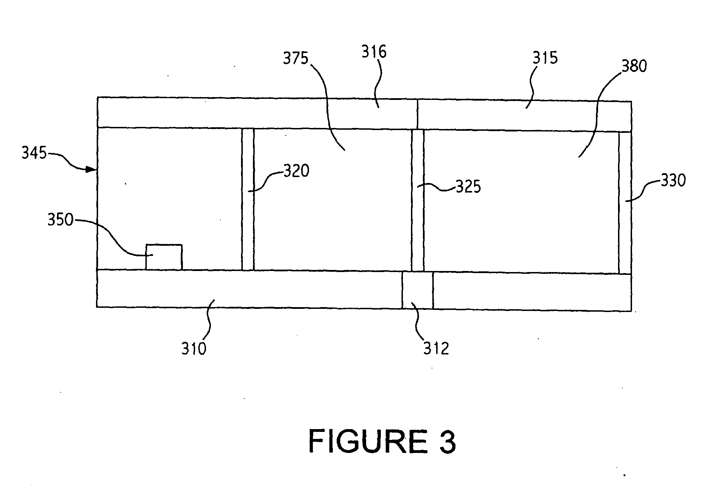

FIG. 3 shows simplified a side view of fuel cell portion 300 of an embodiment in accordance with the invention. Fuel cartridge 345 is typically located above mixing chamber 310 and next to anode region 375. Fuel cartridge 345 includes fuel membrane 350 which is typically part of fuel cartridge 345. Mixing chamber 310 houses water membrane 312 and includes selectively permeable membrane 130. A microelectromechanical system (MEMS) pump (not shown) may be used to facilitate mixing at about 0.05 cc/hour if diffusive mixing is inadequate. Typical MEMS pumps have power requirements much less than 1 mW. Insulation layer 320 located between fuel cartridge 345 and anode region 375 acts to thermally insulate fuel cartridge block 345 from anode region 375. Anode region 375 includes anode side 160 of fuel stack 120 shown in FIG. 1. Air vent 316 vents anode region 375 and air vent 315 vents cathode region 380. Typically, two layers of filter material cover air vents 315 to prevent entry of contaminants-a first outer layer that is coarse to keep out particulates and a second layer underneath that is finer, made from material such as, for example, GORTEX®. Membrane 325 separates anode region 375 from cathode region 380 and contains the fuel cell membrane electrode assembly. Cathode region 380 includes cathode side 180 of fuel cell stack 120 shown in FIG. 1. Cathode region 380 is adjacent to water recovery region 330 which includes an array of microchannels of water recovery mechanism 122 (see FIG. 1). The microchannels are typically about 1-5 mm in length with a width and depth of about 100 µm. The number of microchannels needed in water recovery region 330 is determined by the power output and the resulting flow rate. Given a micro fuel cell operating at about 20-30% efficiency, the methanol flow rate is about 0.04 cc/hour. Water production from a 1 W fuel cell is approximately on the order of magnitude of the perspiration of a human which is about 6.1 x 10⁻⁴ g/hour and scales linearly with the power of the fuel cell.

While the invention has been described in conjunction with specific embodiments, it is evident to those skilled in the art that many alternatives, modifications, and variations will be apparent in light of the foregoing description.

Accordingly, the invention is intended to embrace all other such alternatives, modifications, and variations that fall within the spirit and scope of the appended claims.

## Claims

1. A wireless optical navigation device (200) comprising:
an optical position tracking system (215, 216, 235, 285, 290);
a transmitter (235) electrically coupled to said optical position tracking system (215, 216, 235, 285, 290); and
a micro fuel cell (100) electrically coupled to said transmitter (235) and said optical position tracking system (215, 216, 285, 290), said micro fuel cell (100) capable of providing electrical power for said optical position tracking system (215, 216, 235, 285, 290) and said transmitter (235).

2. The apparatus of Claim 1 wherein said transmitter (235) is an infrared type transmitter.

3. The apparatus of Claim 1 or 2 wherein said micro fuel cell (100) is a direct methanol micro fuel cell.

4. The apparatus of Claim 1 or 2 wherein said micro fuel cell (100) is a water recycling micro fuel cell.

5. The apparatus of one of Claims 1 to 4 wherein said micro fuel cell (100) comprises a MEMs pump.

6. The apparatus of one of Claims 1 to 5 wherein said micro fuel cell comprises microchannel structures for waste gas removal.

7. The apparatus of one of Claims 1 to 6 wherein said micro fuel cell (100) comprises microchannel structures for water recovery.

8. The apparatus of one of Claims 1 to 7 further comprising a replaceable fuel cartridge (210).

9. The apparatus of Claim 8 wherein said replaceable fuel cartridge (210) contains methanol.

10. The apparatus of Claim 8 or 9 wherein said replaceable fuel cartridge (210) includes a fuel membrane (132).

11. The apparatus of one of Claims 1 to 10 further comprising a capacitor that is electrically coupled to said micro fuel cell (100) and said optical position tracking system (215, 216, 235, 285, 290).

12. The apparatus of one of Claims 1 to 11 further comprising a rechargeable battery (245) that is electrically coupled to said micro fuel cell (100) and said optical position tracking system (215, 216, 235, 285, 290).

13. The apparatus of Claim 12 wherein said battery (245) is a polymer lithium battery.
